# EUROPÄISCHE PATENTSCHRIFT

(11) **EP 2 888 143 B1**
(45) Veröffentlichungstag und Bekanntmachung des Hinweises auf die Patenterteilung: **12.10.2016**
(21) Anmeldenummer: 13756066.0
(22) Anmeldetag: 23.08.2013
(51) Int. Cl.: B60W 50/08, B60W 50/14, B60W 10/06, B60W 10/184, B60W 30/18, B60W 40/109, B60R 21/01

(54) **VERFAHREN UND SYSTEM ZUR FÖRDERUNG EINES GLEICHMÄSSIGEN FAHRSTILS**
METHOD AND SYSTEM FOR PROMOTING A UNIFORM DRIVING STYLE
PROCÉDÉ ET SYSTÈME VISANT À FAVORISER UN STYLE DE CONDUITE RÉGULIER

(30) Priorität: 24.08.2012 DE 102012215100
(43) Veröffentlichungstag der Anmeldung: 01.07.2015
(73) Patentinhaber: Continental Teves AG&Co. Ohg, 60488 Frankfurt (DE)
(72) Erfinder: RASTE, Thomas, 61440 Oberursel (DE); LAUER, Peter, 61184 Karben (DE); ECKERT, Alfred, 55129 Mainz-Hechtsheim (DE)
(86) Internationale Anmeldenummer: PCT/EP2013/067570
(87) Internationale Veröffentlichungsnummer: WO 2014/029882

(56) Entgegenhaltungen:
- DE-A1- 10 242 124
- DE-A1-102005 033 995
- DE-A1-102005 040 791
- JP-A- 2009 101 830

## Beschreibung

Die Erfindung betrifft ein Verfahren zur Förderung eines gleichmäßigen Fahrstils gemäß Oberbegriff von Anspruch 1 und ein System zur Förderung eines gleichmäßigen Fahrstils gemäß Oberbegriff von Anspruch 11.

Im Stand der Technik ist bereits eine Vielzahl unterschiedlicher Sensorsysteme zur Umfelderfassung bekannt. Mittels dieser Sensorsysteme ist es beispielsweise möglich, Aussagen über den Straßenzustand zu treffen, den Abstand zu einem Vorausfahrzeug zu bestimmen und auch das Auftreten von Gefahrensituationen zu erkennen. Ebenso ist die Verwendung von globalen Satellitennavigationssystemen in Verbindung mit digitalem Kartenmaterial in Kraftfahrzeugen bekannt, beispielsweise zur Streckenführung oder auch zur Bewarnung des Fahrers, wenn dieser sich einer engen Kurve mit zu hoher Geschwindigkeit nähert. Schließlich ist es bekannt, zur Gefahrenabwendung autonome Eingriffe in die Fahrzeugsteuerung, insbesondere in die Fahrzeugbremsanlage, auf Basis der erfassten Umfeldsensordaten bzw. des digitalen Kartenmaterials auszuführen.

In diesem Zusammenhang offenbart die DE 10 2009 041 580 A1 ein Verfahren zur vorausschauenden Warnung vor Kurven. Gemäß der DE 10 2009 041 580 A1 wird dazu ein Kurvenverlauf mittels Umfeldsensoren wie z.B. Strahlensensoren bzw. Kamerasensoren detektiert und mit einem auf digitalen Karteninformationen basierenden Kurvenverlauf verglichen. Aus dem Vergleich wird ein Kurvenverifikationssignal erzeugt, welches die ermittelten Unterschiede des detektierten Kurvenverlaufs mit dem auf den Karteninformationen basierenden Kurvenverlauf angibt. Abhängig vom Kurvenverifikationssignal, der Position und der Geschwindigkeit des Fahrzeugs kann ein Kurvenwarnsignal erzeugt und ausgegeben werden, um den Fahrer zu warnen oder mittels eines Eingriffs in die Fahrzeugsteuerung eine gezielte Verzögerung des Fahrzeugs herbeizuführen.

Aus der EP 1 805 530 B1 ist ein Verfahren zur Erhöhung der Fahrsicherheit bzw. des Komforts eines Kraftfahrzeugs bekannt, bei welchem Daten eines Fahrzeugsteuergeräts, welches zur Steuerung einer sicherheitserhöhenden Aufgabe vorgesehen ist, mit Daten eines Navigationsgeräts bzw. mit kartographischen Daten logisch verknüpft werden. Die kartographische Daten werden dabei gemeinsam mit sensorisch direkt oder indirekt im Fahrzeug erfassten Informationen über den aktuellen Fahrzustand zur Ermittlung eines aktuellen Gefahrenwertes herangezogen. In Abhängigkeit des Gefahrenwertes können Eingriffe in die Funktionsgruppen mit sicherheitserhöhenden Aufgaben erfolgen, wobei insbesondere zusätzlich oder an Stelle des Eingriffs eine optische, akustische oder haptische Warnung an den Fahrzeugführer erfolgt.

In der unveröffentlichten DE 10 2012 212 616.3 wird ein Verfahren zur Verbesserung der Fahrstabilität offenbart. Wenn anhand von auf digitalen Kartendaten basierenden Streckeninformationen und auf GPS-Daten basierenden Positionsdaten vorhergesagt wird, dass eine kritische Fahrsituation zu erwarten ist, insbesondere aufgrund einer Annäherung mit überhöhter Geschwindigkeit an eine vorausliegende Kurve, dann wird ein fahrerunabhängiger Bremseingriff ausgelöst. Der Vorhersage wird dabei eine vom Fahrer über eine Mensch-Maschine-Schnittstelle vorgegebene Information zum maximal auszunutzenden Reibwert zugrunde gelegt. Außerdem wird anhand einer oder mehrerer Fahrzustandsgrößen, den Streckeninformationen und den momentanen Positionsdaten ein benötigter Reibwert ermittelt. Dieser benötigte Reibwert wird dem Fahrer gemeinsam mit einer Information über den anzunehmenden Reibwert bereitgestellt.

Nachteilig bei den aus dem Stand der Technik bekannten Verfahren ist es jedoch, dass die bekannten Eingriffe in die Fahrzeugsteuerung ausschließlich sicherheitsorientiert und ohne Berücksichtigung der Förderung oder zumindest Wahrung eines gleichmäßigen und flüssigen Fahrstils erfolgen.

Die JP 2009 101830 A ist ein Fahrzeugsystem offenbart, welches dazu dient unangenehme Querbeschleunigungen bei Kurvenfahrten zu verhindern. Hierzu wird mittels einer Schätzeinheit im Fahrzeug die Querbeschleunigung unter der Annahme der gleichbleibenden Fahrtgeschwindigkeit und unter Berücksichtigung von Fahrzeugparametern abgeschätzt und ggf. ein Eingriff in die Fahrzeugführung durchgeführt, wenn ein Grenzwert überschritten wird.

Der Erfindung liegt daher die Aufgabe zugrunde, ein Verfahren vorzuschlagen, welches Eingriffe in die Fahrzeugsteuerung nicht ausschließlich sicherheitsorientiert durchführt.

Diese Aufgabe wird erfindungsgemäß durch das Verfahren zur Förderung eines gleichmäßigen Fahrstils gemäß Anspruch 1 gelöst. Gemäß dem erfindungsgemäßen Verfahren zur Förderung eines gleichmäßigen Fahrstils, bei welchem eine Längsgeschwindigkeit eines Kraftfahrzeugs und ein Krümmungsradius eines dem Kraftfahrzeug vorausliegenden Streckenabschnitts bei Annäherung des Kraftfahrzeugs an den Streckenabschnitt bestimmt werden, wobei aus dem Krümmungsradius und der Längsgeschwindigkeit eine zu erwartende Querbeschleunigung beim Durchfahren des Streckenabschnitts bestimmt wird und diese mit einem fest vorgegebenen und mit einem vom Fahrer vorgebbaren Querbeschleunigungsgrenzwert verglichen wird erfolgt im Falle, dass die zu erwartende Querbeschleunigung größer als mindestens einer der Querbeschleunigungsgrenzwerte ist, mittels einer optischen und/oder akustischen und/oder haptischen Aufforderung an den Fahrer und/oder mittels eines autonomen Bremseneingriffs eine Verzögerung der Längsgeschwindigkeit, bis die zu erwartende Querbeschleunigung den geringeren der beiden Querbeschleunigungsgrenzwerte erreicht. Das erfindungsgemäße Verfahren zeichnet sich dadurch aus, dass im Falle, dass die zu erwartende Querbeschleunigung kleiner oder gleich dem geringeren der beiden Querbeschleunigungsgrenzwerte ist, mittels einer Motorschleppmomentreduktion die Verzögerung der Längsgeschwindigkeit reduziert wird.

Somit ermöglicht das erfindungsgemäße Verfahren nicht nur eine sowohl gleichmäßige als auch energiesparende und damit umweltschonende Fahrweise, sondern trägt auch zur Erhöhung der Fahrsicherheit bei, da ggf. ein autonomer Bremseneingriff zur Fahrzeugverzögerung vorgesehen ist, um eine kritische Querbeschleunigung beim Durchfahren des den Krümmungsradius aufweisenden Streckenabschnitts zu vermeiden.

Die im Sinne der Erfindung mit dem Begriff "zu erwartende Querbeschleunigung" bezeichnete physikalische Größe ist im einfachsten Fall diejenige Querbeschleunigung, welche sich rechnerisch aus dem Krümmungsradius und der aktuellen Längsgeschwindigkeit des Kraftfahrzeugs ergibt. Vorzugsweise können aber auch komplexere Modelle zugrunde gelegt werden, welche eine Vorhersage einer wahrscheinlichen Längsgeschwindigkeit zum Zeitpunkt des Durchfahrens des den Krümmungsradius aufweisenden Streckenabschnitts erlauben. In diesem Fall wird besonders bevorzugt die wahrscheinliche Längsgeschwindigkeit zur Bestimmung der zu erwartenden Querbeschleunigung herangezogen.

Sofern ausschließlich ein fest vorgegebener Querbeschleunigungsgrenzwert und kein vom Fahrer vorgegebener Querbeschleunigungsgrenzwert zur Verfügung steht, wird der fest vorgegebene Querbeschleunigungsgrenzwert vom erfindungsgemäßen Verfahren als geringerer der beiden Querbeschleunigungsgrenzwerte angenommen. Der vom Fahrer vorgegebener Querbeschleunigungsgrenzwert kann in diesem Fall z.B. auf unendlich gesetzt werden.

Der fest vorgegebene Querbeschleunigungsgrenzwert ist vorzugsweise nach Fahrsicherheitsaspekten derart gewählt, dass er ein Abkommen des Kraftfahrzeugs von der Fahrbahn bzw. ein Schleudern des Fahrzeugs aufgrund der für die zu erwartende Querbeschleunigung zu geringen Seitenführungskräfte der Fahrzeugreifen gerade noch verhindert. Somit ist in der Regel der fest vorgegebene Querbeschleunigungsgrenzwert größer als der vom Fahrer vorgebbaren Querbeschleunigungsgrenzwert. Besonders bevorzugt wird dem Fahrer nicht die Möglichkeit geboten, einen Querbeschleunigungsgrenzwert vorzugeben, der größer als der fest vorgegebene Querbeschleunigungsgrenzwert ist.

Bevorzugt ist es vorgesehen, dass der vom Fahrer vorgebbare Querbeschleunigungsgrenzwert mittels einer Mensch-Maschine-Schnittstelle vorgebbar ist, wobei der vom Fahrer vorgebbare Querbeschleunigungsgrenzwert indirekt über die Auswahl eines vom Fahrer bevorzugten Fahrstils vorgebbar ist. Daraus ergibt sich der Vorteil, dass der Fahrer nicht mit für ihn unverständlichen Zahlenwerten konfrontiert wird, deren Auswahl und Vorgabe als Querbeschleunigungsgrenzwert in der Regel zu einem für die meisten Fahrer nicht vorhersehbaren Ergebnis führt, da diese in der Regel nicht die notwendige technische Vorbildung besitzen, welche zur Beurteilung eines Querbeschleunigungswerts notwendig ist. Stattdessen werden dem Fahrer Auswahlmöglichkeiten mit für ihn nachvollziehbaren Begriffen vorgeschlagen, wobei die Auswahl eines der Begriffe automatisch die Auswahl und Vorgabe eines zugehörigen Querbeschleunigungsgrenzwerts nach sich zieht. Beispiele für eine derartige indirekte Auswahl des Querbeschleunigungsgrenzwerts über einen für den Fahrer verständlichen Begriff sind etwa die Vorgaben "sportlich", "normal" oder "eco". Der Vorgabe "sportlich" entspricht dabei bevorzugt ein Querbeschleunigungswert von 9 m/s², der Vorgabe "normal" entspricht bevorzugt ein Querbeschleunigungswert von 4 m/s² und der Vorgabe "eco" entspricht bevorzugt ein Querbeschleunigungswert von 2,5 m/s².

Die Mensch-Maschine-Schnittstelle kann bevorzugt als Display, besonders bevorzugt als Touch-Screen, als Tastenfeld oder in Form eines einzelnen Tasters ausgebildet sein.

Zweckmäßigerweise ist es vorgesehen, dass ein Ausführungsstart des Verfahrens erfolgt, wenn der Fahrer keine Pedalbetätigung vornimmt und dass eine Ausführungsbeendigung des Verfahrens erfolgt, wenn der Fahrer eine Pedalbetätigung vornimmt. Eine Situation, in welcher der Fahrer keine Pedalbetätigung vornimmt, liegt in der Regel dann vor, wenn der Fahrer beim Annähern an eine Kurve oder an ein vorausfahrendes Fahrzeug kurzfristig unschlüssig ist, ob eine Reduzierung der Längsgeschwindigkeit notwendig oder sinnvoll ist. In dieser Phase der Unschlüssigkeit des Fahrers kann nun ein Ausführungsstart des erfindungsgemäßen Verfahrens erfolgen, wobei dem Fahrer insbesondere optisch angezeigt wird, dass das Verfahren gestartet wurde und der Fahrer somit die weitere Steuerung der Längsgeschwindigkeit nicht selbständig vornehmen muss. Ein weiterer Vorteil ist, dass das Verfahren nicht gestartet wird, während der Fahrer aktiv eine Eingabe zur Steuerung der Längsgeschwindigkeit vornimmt. Eine Überlagerung von Steuereingaben bzw. gar eine Übersteuerung des Fahrers gegen dessen Willen wird somit vermieden. Indem eine Ausführungsbeendigung des Verfahrens erfolgt, wenn der Fahrer eine Pedalbetätigung vornimmt, wird zudem gewährleistet, dass der Fahrer jederzeit wieder die volle Kontrolle über das Fahrzeug übernehmen kann.

Weiterhin ist es bevorzugt, dass die Bestimmung des Krümmungsradius mittels Kamerasensorik und/oder mittels Radarsensorik und/oder mittels Lidarsensorik und/oder mittels Lasersensorik und/oder mittels digitalem Kartenmaterial und einer Positionsbestimmung des Kraftfahrzeugs erfolgt. Die genannten Sensorikgattungen sind zur Umfelderfassung einschließlich der Bestimmung eines Krümmungsradius bei einer Annäherung des Fahrzeugs an den den Krümmungsradius aufweisenden Streckenabschnitt geeignet. Sofern mehrere der genannten Sensorikgattungen im Kraftfahrzeug zur Verfügung stehen, kann die Bestimmung eines Krümmungsradius redundant und zuverlässiger ausgeführt werden. Eine Bestimmung des Krümmungsradius mittels digitalem Kartenmaterial und einer Positionsbestimmung des Kraftfahrzeugs bietet zudem den Vorteil, dass ein Großteil der aktuellen Kraftfahrzeuge bereits mit Positionsbestimmungseinrichtungen, z.B. auf Basis von GPS, und mit digitalem Kartenmaterial zur Streckenführung ausgestattet sind. Ein kostenverursachender zusätzlicher Austattungsaufwand ist in diesem Fall nicht notwendig.

Insbesondere ist es bevorzugt, dass die Positionsbestimmung des Kraftfahrzeugs mittels eines globalen Satellitennavigationssystems und/oder mittels eines Karteneinpassungsverfahrens erfolgt. Viele der aktuellen Kraftfahrzeuge verfügen bereits über Positionsbestimmungseinrichtungen auf Basis von z.B. GPS, was die Implementierungskosten für das erfindungsgemäße Verfahren in diese Kraftfahrzeuge gering hält. Die Positionsbestimmung mittels eines Karteneinpassungsverfahrens ermöglicht es zusätzlich oder alternativ, erfasste Umfelddaten, wie z.B. eine Tunneleinfahrt, eine scharfe Kurve oder eine charakteristische Straßenkreuzung, mit digitalem Kartenmaterial, welches ebenfalls Umfelddaten beschreibt, abzugleichen und die aktuelle Position des Kraftfahrzeugs über den Abgleich in die Kartendaten einzupassen.

Außerdem ist es zweckmäßig, dass die durch den autonomen Bremseneingriff erfolgte Verzögerung der Längsgeschwindigkeit einen vorgegebenen Verzögerungsgrenzwert, insbesondere 3 m/s², nicht übersteigt. Dadurch wird vermieden, dass das erfindungsgemäße Verfahren durch einen scharfen und ggf. plötzlichen Verzögerungsvorgang einen Auffahrunfall provoziert. Sofern eine stärkere Verzögerung notwendig erscheint als sie der vorgegebene Verzögerungsgrenzwert zulässt, kann eine entsprechende Warnung bzw. Aufforderung an den Fahrer ausgegeben werden. Der Fahrer kann dann nach einer Beurteilung der vorliegenden Situation eine entsprechend starke Verzögerung einstellen.

Außerdem ist es vorteilhaft, dass aus einer Mehrzahl von möglichen vom Kraftfahrzeug zu durchfahrenden Streckenabschnitten der vorausliegende Streckenabschnitt mittels Daten eines Streckenplaners ausgewählt wird. Somit kann auch im Falle des Annäherns des Kraftfahrzeugs an eine Streckengabelung bereits im Voraus sicher erkannt werden, welcher Streckenabschnitt vom Kraftfahrzeug durchfahren werden wird, was wiederum die Bestimmung des Krümmungsradius dieses Streckenabschnitts im Voraus ermöglicht.

Weiterhin ist es vorteilhaft, dass bei Erkennen auf ein Überschreiten des Querbeschleunigungsgrenzwerts, insbesondere des fest vorgegebenen Querbeschleunigungsgrenzwerts, beim Durchfahren des den Krümmungsradius aufweisenden Streckenabschnitts passive Sicherheitsmittel zum Schutz von Fahrzeuginsassen aktiviert werden, insbesondere ein oder mehrere Gurtstraffer aktiviert werden. Ein Überschreiten des Querbeschleunigungsgrenzwerts, insbesondere des fest vorgegebenen Querbeschleunigungsgrenzwerts, kann ein Hinweis auf eine kurzfristig eintretende Gefahrensituation sein, da etwa die Seitenführungskräfte der Fahrzeugreifen zu gering für die zu erwartende Querbeschleunigung sein können. Durch vorausschauendes Aktivieren von passiven Sicherheitsmittel, wird das Verletzungsrisiko für den Fahrer und evtl. weitere Fahrzeuginsassen in einer derartigen Situation verringert.

Bevorzugt ist es vorgesehen, dass eine Reibwertschätzung durchgeführt wird, wobei die die Reibwertschätzung einer Vorgabe des fest vorgegebenen Querbeschleunigungsgrenzwerts zugrunde gelegt wird. Die Reibwertschätzung kann z.B. aus der Wetterlage bzw. einer zuvor ausgeführten ABS- oder ESC-Regelung erfolgen. So ist etwa bei Regen, insbesondere bei tiefen Temperaturen, mit einem deutlich verringerten Reibwert zu rechnen. Diesem Umstand kann Rechnung getragen werden, indem der fest vorgegebene Querbeschleunigungsgrenzwert vom erfindungsgemäßen Verfahren selbsttätig angepasst wird.

Außerdem ist es vorgesehen, dass mittels der Kamerasensorik und/oder mittels der Radarsensorik und/oder mittels der Lidarsensorik und/oder mittels der Lasersensorik ein dem Kraftfahrzeug vorausfahrendes Fahrzeug erkannt wird und ein Abstand und eine Differenzgeschwindigkeit zu diesem bestimmt werden, wobei im Falle, dass das Kraftfahrzeug sich dem vorausfahrenden Fahrzeug annähert und dabei voraussichtlich einen verkehrsüblichen Sicherheitsabstand unterschreiten wird mittels einer optischen und/oder akustischen und/oder haptischen Aufforderung an den Fahrer oder mittels eines autonomen Bremseneingriffs eine Verzögerung der Längsgeschwindigkeit erfolgt, so dass das Kraftfahrzeug den verkehrsüblichen Sicherheitsabstand zum vorausfahrenden Fahrzeug voraussichtlich nicht unterschreiten wird und wobei im Falle, dass das Kraftfahrzeug sich dem vorausfahrenden Fahrzeug nicht weiter annähert und/oder sich der Abstand zum vorausfahrenden Fahrzeug vergrößert, mittels einer Motorschleppmomentreduktion die Längsverzögerung reduziert wird. Daraus ergibt sich der Vorteil, dass das erfindungsgemäße Verfahren auch bei Erkennen eines dem Kraftfahrzeug vorausfahrenden Fahrzeugs vorteilhaft zur Anwendung kommt. Dies stellt im Sinne der Erfindung eine dem Durchfahren eines einen Krümmungsradius aufweisenden Streckenabschnitts analoge Situation dar. Die Analogie beider Situationen besteht darin, dass in beiden Fällen vom Fahrer abgeschätzt werden muss, mit welchem Anfahrverhalten er sich dem den Krümmungsradius aufweisenden Streckenabschnitt bzw. dem vorausfahrenden Fahrzeug annähern will. Hierbei kann das erfindungsgemäße Verfahren zur Förderung eines gleichmäßigen Fahrstils eine Unterstützung sein.

Die vorliegende Erfindung betrifft weiterhin ein System zur Förderung eines gleichmäßigen Fahrstils, welches ein Kraftfahrzeug und Kamerasensorik und/oder Radarsensorik und/oder Lidarsensorik und/oder Lasersensorik und/oder Positionsbestimmungsmittel und/oder einen digitales Kartenmaterial umfassenden elektronischen Speicher umfasst. Weiterhin umfasst das System Mittel zur Bestimmung einer Längsgeschwindigkeit des Kraftfahrzeugs und passive Fahrzeuginsassensicherheitsmittel und Mittel zur Bestimmung eines Krümmungsradius eines dem Kraftfahrzeug vorausliegenden Streckenabschnitts sowie ein Fahrpedal und ein Bremspedal zum Einstellen einer Längsgeschwindigkeit des Kraftfahrzeugs. Das System umfasst außerdem Wetterlagesensorik und Mittel zur Reibwertschätzung sowie Mittel zur Bestimmung einer zu erwartenden Querbeschleunigung beim Durchfahren des Streckenabschnitts und Vergleichsmittel zum Vergleichen der zu erwartenden Querbeschleunigung mit einem fest vorgegebenen und mit einem vom Fahrer vorgebbaren Querbeschleunigungsgrenzwert. Schließlich umfasst das System Mittel zur optischen und/oder akustischen und/oder haptischen Aufforderung an den Fahrer zur Verzögerung der Längsgeschwindigkeit und/oder Bremseneingriffsmittel zur autonomen Verzögerung der Längsgeschwindigkeit und Mittel zur Motorschleppmomentreduktion. Das System zeichnet sich dadurch aus dass es das erfindungsgemäße Verfahren ausführt. Das erfindungsgemäße System umfasst somit alle zur Ausführung des erfindungsgemäßen Verfahrens notwendigen Mittel und führt durch die Ausführung des erfindungsgemäßen Verfahrens zu den bereits beschriebenen Vorteilen.

Die Wetterlagesensorik kann dabei z.B. als Regensensor bzw. Temperatursensor ausgeführt sein bzw. einen Radioempfänger oder sonstigen geeigneten kanellosen Datenempfänger zum Empfang von Wetterdaten umfassen.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein Kraftfahrzeug, das sich einem einen Krümmungsradius aufweisenden Streckenabschnitt nähert,
- Fig. 2: ein Kraftfahrzeug, das sich einem dem Kraftfahrzeug vorausfahrenden Fahrzeug nähert und
- Fig. 3: einen beispielhaften Aufbau eines erfindungsgemäßen Systems.

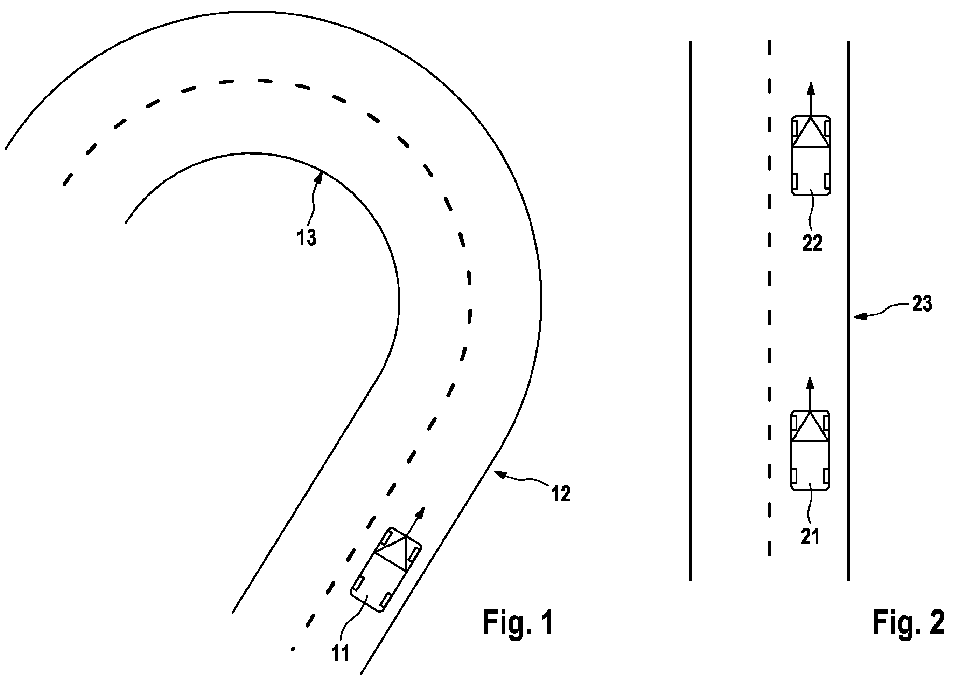

Fig. 1 zeigt Kraftfahrzeug 11, welches sich auf Straße 12 einen Krümmungsradius aufweisendem Streckenabschnitt 13 annähert. Kraftfahrzeug 11 ist mit dem erfindungsgemäßen System zur Förderung eines gleichmäßigen Fahrstils ausgestattet. Mittels eines GPS-Empfängers in Kraftfahrzeug 11 erfolgt eine Positionsbestimmung von Kraftfahrzeug 11 und mittels in Kraftfahrzeug 11 vorhandenem digitalen Kartenmaterial wird erkannt, dass sich Kraftfahrzeug 11 einen Krümmungsradius aufweisendem Streckenabschnitt 13 annähert. Gleichzeitig wird aus dem digitalen Kartenmaterial der Krümmungsradius von Streckenabschnitt 13 bestimmt. Der mittels des digitalen Kartenmaterials bestimmte Krümmungsradius wird im Folgenden von in Kraftfahrzeug 11 vorhandener Kamerasensorik verifiziert. Aus dem somit bekannten Krümmungsradius und der aktuellen Längsgeschwindigkeit wird eine zu erwartende Querbeschleunigung bestimmt. Der Bestimmung der Querbeschleunigung wird dabei der Zusammenhang (Querbeschleunigung = [Längsgeschwindigkeit]² / Krümmungsradius) zugrunde gelegt. Da der Fahrer bei der Annäherung an Streckenabschnitt 13 zunächst unschlüssig hinsichtlich der zu wählenden Längsgeschwindigkeit ist und für eine kurze Zeitspanne keine Pedalbetätigung vornimmt, wird automatisch die Ausführung des erfindungsgemäßen Verfahrens in Kraftfahrzeug 11 gestartet. Dies wird dem Fahrer über eine optische Anzeige im Armaturenbrett angezeigt. Zunächst vergleicht das erfindungsgemäße Verfahren die zu erwartende Querbeschleunigung mit einem Querbeschleunigungsgrenzwert. Der für den Vergleich herangezogene Querbeschleunigungsgrenzwert ist ein vom Fahrer vorgegebener Querbeschleunigungsgrenzwert, welcher eine maximale Querbeschleunigung auf 2,5 m/s² begrenzt und geringer ist als der fest vorgegebene Querbeschleunigungsgrenzwert 10 m/s². Der Fahrer hat diese Vorgabe bereits vor Fahrtantritt vorgegeben, indem er den Fahrstil "eco" gewählt hat. Das System erkennt nun anhand des Vergleichs, dass keine weitere Verzögerung der Längsgeschwindigkeit notwendig ist, da die zu erwartende Querbeschleunigung etwas geringer ist als der vom Fahrer vorgegebene Querbeschleunigungsgrenzwert. Daher reduziert das System mittels einer Motorschleppmomentregelung die Verzögerung der Längsgeschwindigkeit, um damit eine weitere, unnötige Reduzierung der Längsgeschwindigkeit von Kraftfahrzeug 11 zu vermeiden. Sobald Kraftfahrzeug 11 Streckenabschnitt 13 durchfahren hat, wird die vollständige Fahrzeugkotrolle wieder an den Fahrer zurückgegeben. Dazu wird dieser mittels einer optischen Anzeige und eines akustischen Summtons aufgefordert, eine Pedalbetätigung vorzunehmen, woraufhin die Ausführung des erfindungsgemäßen Verfahrens beendet wird.

In Fig. 2 ist Kraftfahrzeug 21 dargestellt, welches über das erfindungsgemäße System zur Förderung eines gleichmäßigen Fahrstils verfügt und sich auf Straße 23 Fahrzeug 22 annähert. Mittels Radarsensorik bestimmt das erfindungsgemäße System in Kraftfahrzeug 21 sowohl den Abstand zu Fahrzeug 22 als auch die Differenzgeschwindigkeit zu Fahrzeug 22. Dabei wird erkannt, dass bei unveränderter Geschwindigkeit von Kraftfahrzeug 21 ein verkehrsüblicher Sicherheitsabstand von Kraftfahrzeug 21 zu Fahrzeug 22 voraussichtlich unterschritten werden wird. Da der Fahrer von Kraftfahrzeug 21 durch das schnelle Annähern an Fahrzeug 22 kurzfristig verunsichert ist, nimmt er keine Pedalbetätigung vor. Dadurch wird das erfindungsgemäße System aktiviert und startet die Ausführung des erfindungsgemäßen Verfahrens. Dieses gibt eine optische Aufforderung an den Fahrer aus, die Längsgeschwindigkeit von Kraftfahrzeug 21 zu reduzieren. Da der Fahrer jedoch nicht reagiert und sich der Abstand zu Fahrzeug 22 weiterhin derart reduziert, dass weiterhin voraussichtlich ein verkehrsüblicher Sicherheitsabstand unterschritten werden wird, wird schließlich ein autonomer Bremseneingriff ausgeführt, um eine kritische Verkehrssituation zu vermeiden.

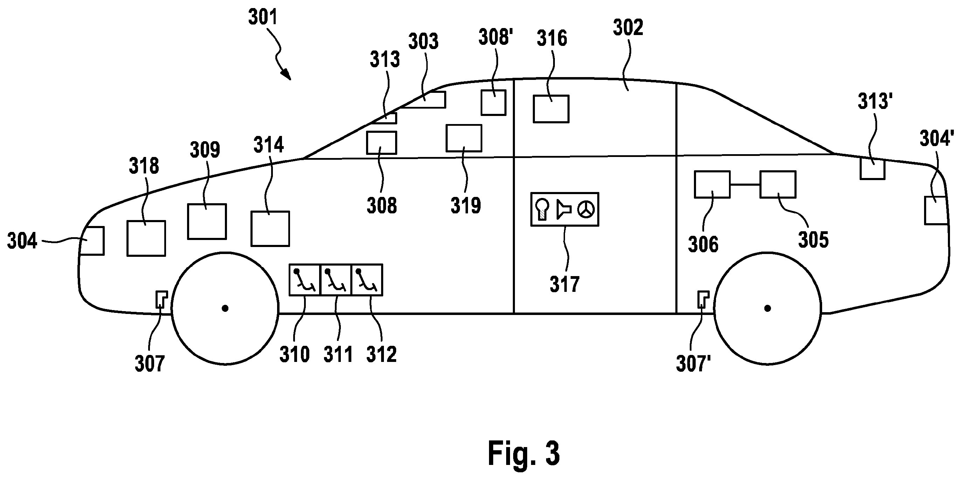

Fig. 3 zeigt eine mögliche Ausführungsform von erfindungsgemäßem System 301 zur Förderung eines gleichmäßigen Fahrstils. System 301 umfasst Kraftfahrzeug 302 sowie eine Vielzahl weiterer, beispielsgemäß von Kraftfahrzeug 302 umfasster Elemente. Diese Elemente sind Kamerasensorik 303 in Form einer Stereokamera, Radarsensorik 304 und 304' in Form eines frontal ausgerochteten Radarsensors und eines rückwärtigen Radarsensors, elektronischer Speicher 305, welcher digitales Kartenmaterial umfasst und mit Positionsbestimmungsmitteln 306 in Form von GPS-Empfänger auf Datenebene gekoppelt ist, wobei elektronischer Speicher 305 und Positionsbestimmungsmittel 306 gemeinsam die Funktion eines Streckenplaners und Streckenführers erfüllen. Weiterhin umfasst System 301 Mittel zur Bestimmung einer Längsgeschwindigkeit des Kraftfahrzeugs 307 und 307' in Form von ABS-Drehzahlsensoren, passive Sicherheitsmittel zum Schutz von Fahrzeuginsassen 308 und 308' in Form eines Airbags und eines Gurtstraffers, Mittel zur Bestimmung eines Krümmungsradius eines dem Kraftfahrzeug vorausliegenden Streckenabschnitts 309 in Form eines elektronischen Rechenmoduls, Fahrpedal 310, Bremspedal 311, Kupplungspedal 312sowie Mensch-Maschine-Schnittstelle 319 in Form eines Touch-Screens. Schließlich umfasst das System Wetterlagesensorik 313 und 313' in Form eines Regensensors und eines Außentemperatursensors, Mittel zur Reibwertschätzung 316 in Form eines weiteren elektronischen Rechenmoduls, Mittel zur Bestimmung einer zu erwartenden Querbeschleunigung 309, welche in das elektronische Rechenmodul der Mittel zur Bestimmung eines Krümmungsradius 309 integriert sind, da das elektronische Rechenmodul ausreichend Rechenkapazität für eine Vielzahl von Verwendungen aufweist, Vergleichsmittel 309 zum Vergleichen der zu erwartenden Querbeschleunigung mit einem fest vorgegebenen Querbeschleunigungsgrenzwert und mit einem vom Fahrer vorgebbaren Querbeschleunigungsgrenzwert, welche ebenfalls in das elektronische Rechenmodul der Mittel zur Bestimmung eines Krümmungsradius 309 integriert ist, Mittel zur optischen, akustischen und haptischen Aufforderung 317, welche in Form eines Displays, einer Anbindung an die Lautsprecheranlage von Kraftfahrzeug 302 und eines in das Lenkrad integrierten Vibrationserzeugers ausgeführt sind sowie Bremseneingriffsmittel 318 in Form einer ESC-Anlage und Mittel zur Motorschleppmomentreduktion 314 in Form eines elektronischen Gaszugs.

## Patentansprüche

1. Verfahren zur Förderung eines gleichmäßigen Fahrstils,
- bei welchem eine Längsgeschwindigkeit eines Kraftfahrzeugs (11, 21, 302) und ein Krümmungsradius eines dem Kraftfahrzeug (11, 21, 302) vorausliegenden Streckenabschnitts (13) bei Annäherung des Kraftfahrzeugs an den Streckenabschnitt (13) bestimmt werden,
- wobei aus dem Krümmungsradius und der Längsgeschwindigkeit eine zu erwartende Querbeschleunigung beim Durchfahren des Streckenabschnitts (13) bestimmt wird und diese mit einem fest vorgegebenen und mit einem vom Fahrer vorgebbaren Querbeschleunigungsgrenzwert verglichen wird und
- wobei im Falle, dass die zu erwartende Querbeschleunigung größer als mindestens einer der Querbeschleunigungsgrenzwerte ist, mittels einer optischen und/oder akustischen und/oder haptischen Aufforderung an den Fahrer und/oder mittels eines autonomen Bremseneingriffs eine Verzögerung der Längsgeschwindigkeit erfolgt, bis die zu erwartende Querbeschleunigung den geringeren der beiden Querbeschleunigungsgrenzwerte erreicht,
**dadurch gekennzeichnet,**
**dass** im Falle, dass die zu erwartende Querbeschleunigung kleiner oder gleich dem geringeren der beiden Querbeschleunigungsgrenzwerte ist, mittels einer Motorschleppmomentreduktion die Verzögerung der Längsgeschwindigkeit reduziert wird.

2. Verfahren nach Anspruch 1,
**dadurch gekennzeichnet,**
**dass** der vom Fahrer vorgebbare Querbeschleunigungsgrenzwert mittels einer Mensch-Maschine-Schnittstelle (319) vorgebbar ist, wobei der vom Fahrer vorgebbare
Querbeschleunigungsgrenzwert indirekt über die Auswahl eines vom Fahrer bevorzugten Fahrstils vorgebbar ist.

3. Verfahren nach mindestens einem der Ansprüche 1 und 2, **dadurch gekennzeichnet,**
**dass** ein Ausführungsstart des Verfahrens erfolgt, wenn der Fahrer keine Pedalbetätigung vornimmt und dass eine Ausführungsbeendigung des Verfahrens erfolgt, wenn der Fahrer eine Pedalbetätigung vornimmt.

4. Verfahren nach mindestens einem der Ansprüche 1 bis 3, **dadurch gekennzeichnet,**
**dass** die Bestimmung des Krümmungsradius mittels Kamerasensorik (303) und/oder mittels Radarsensorik (304, 304') und/oder mittels Lidarsensorik und/oder mittels Lasersensorik und/oder mittels digitalem Kartenmaterial (305) und einer Positionsbestimmung des Kraftfahrzeugs erfolgt.

5. Verfahren nach Anspruch 4,
**dadurch gekennzeichnet,**
**dass** die Positionsbestimmung des Kraftfahrzeugs mittels eines globalen Satellitennavigationssystems und/oder mittels eines Karteneinpassungsverfahrens erfolgt.

6. Verfahren nach mindestens einem der Ansprüche 1 bis 5, **dadurch gekennzeichnet,**
**dass** die durch den autonomen Bremseneingriff erfolgte Verzögerung der Längsgeschwindigkeit einen vorgegebenen Verzögerungsgrenzwert, insbesondere 3 m/s², nicht übersteigt.

7. Verfahren nach mindestens einem der Ansprüche 1 bis 6, **dadurch gekennzeichnet,**
**dass** aus einer Mehrzahl von möglichen vom Kraftfahrzeug zu durchfahrenden Streckenabschnitten (13) der vorausliegende Streckenabschnitt(13) mittels Daten eines Streckenplaners (305, 306) ausgewählt wird.

8. Verfahren nach mindestens einem der Ansprüche 1 bis 7, **dadurch gekennzeichnet,**
**dass** bei Erkennen auf ein Überschreiten des Querbeschleunigungsgrenzwerts, insbesondere des fest vorgegebenen Querbeschleunigungsgrenzwerts, beim Durchfahren des den Krümmungsradius aufweisenden Streckenabschnitts (13) passive Sicherheitsmittel zum Schutz von Fahrzeuginsassen (308, 308') aktiviert werden, insbesondere ein oder mehrere Gurtstraffer aktiviert werden.

9. Verfahren nach mindestens einem der Ansprüche 1 bis 8, **dadurch gekennzeichnet,**
**dass** eine Reibwertschätzung durchgeführt wird, wobei die Reibwertschätzung einer Vorgabe des fest vorgegebenen Querbeschleunigungsgrenzwerts zugrunde gelegt wird.

10. Verfahren nach mindestens einem der Ansprüche 1 bis 9, **dadurch gekennzeichnet,**
**dass** mittels der Kamerasensorik (303) und/oder mittels der Radarsensorik (304, 304') und/oder mittels der Lidarsensorik und/oder mittels der Lasersensorik ein dem Kraftfahrzeug (11, 21, 302) vorausfahrendes Fahrzeug (22) erkannt wird und ein Abstand und eine Differenzgeschwindigkeit zu diesem bestimmt werden, wobei im Falle, dass das Kraftfahrzeug (11, 21, 302) sich dem vorausfahrenden Fahrzeug (22) annähert und dabei voraussichtlich einen verkehrsüblichen Sicherheitsabstand unterschreiten wird, mittels einer optischen und/oder akustischen und/oder haptischen Aufforderung an den Fahrer oder mittels eines autonomen Bremseneingriffs eine Verzögerung der Längsgeschwindigkeit erfolgt, so dass das Kraftfahrzeug (11, 21, 302) den verkehrsüblichen Sicherheitsabstand zum vorausfahrenden Fahrzeug (22) voraussichtlich nicht unterschreiten wird und wobei im Falle, dass das Kraftfahrzeug (11, 21, 302) sich dem vorausfahrenden Fahrzeug (22) nicht weiter annähert und/oder sich der Abstand zum vorausfahrenden Fahrzeug (22) vergrößert, mittels einer Motorschleppmomentreduktion die Längsverzögerung reduziert wird.

11. System zur Förderung eines gleichmäßigen Fahrstils (301), umfassend ein Kraftfahrzeug (11, 21, 302) und Kamerasensorik (303) und/oder Radarsensorik (304, 304') und/oder Lidarsensorik und/oder Lasersensorik und/oder Positionsbestimmungsmittel (306) und/oder einen digitales Kartenmaterial umfassenden elektronischen Speicher (305) und Mittel zur Bestimmung einer Längsgeschwindigkeit (307, 307') des Kraftfahrzeugs (11, 21, 302) und passive Sicherheitsmittel zum Schutz von Fahrzeuginsassen (308, 308') und Mittel zur Bestimmung eines Krümmungsradius (309) eines dem Kraftfahrzeug vorausliegenden Streckenabschnitts (13) und ein Fahrpedal (310) und ein Bremspedal (311) zum Einstellen einer Längsgeschwindigkeit des Kraftfahrzeugs und
eine Mensch-Maschine-Schnittestelle (319) und Wetterlagesensorik (313, 313') und Mittel zur Reibwertschätzung (316) und Mittel zur Bestimmung einer zu erwartenden Querbeschleunigung (309) beim Durchfahren des Streckenabschnitts (13) und Vergleichsmittel (30) zum Vergleichen der zu erwartenden Querbeschleunigung mit einem fest vorgegebenen und mit einem vom Fahrer vorgebbaren Querbeschleunigungsgrenzwert und Mittel zur optischen und/oder akustischen und/oder haptischen Aufforderung (317) an den Fahrer zur Verzögerung der Längsgeschwindigkeit und/oder Bremseneingriffsmittel (318) zur autonomen Verzögerung der Längsgeschwindigkeit und Mittel zur Motorschleppmomentreduktion (314),
**dadurch gekennzeichnet,**
**dass** das System ein Verfahren nach mindestens einem der Ansprüche 1 bis 10 ausführt.

## Claims

1. Method for promoting a uniform driving style,
- with which a longitudinal speed of a motor vehicle (11, 21, 302) and a radius of curvature of a route segment (13) ahead of the motor vehicle (11, 21, 302) are determined when the motor vehicle is approaching the route segment (13),
- wherein a lateral acceleration to be expected when driving through the route segment (13) is determined from the radius of curvature and the longitudinal speed and is compared with a fixed specified lateral acceleration limit value and with a lateral acceleration limit value specifiable by the driver and
- wherein in the case in which the lateral acceleration to be expected is greater than at least one of the lateral acceleration limit values, a deceleration of the longitudinal speed is carried out by means of a visual and/or audible and/or haptic request to the driver and/or by means of an autonomous braking intervention until the lateral acceleration to be expected reaches the lower of the two lateral acceleration limit values, **characterized in that** in the case in which the lateral acceleration to be expected is less than or equal to the lower of the two lateral acceleration limit values, the deceleration of the longitudinal speed is reduced by means of an engine drag torque reduction.

2. Method according to Claim 1,
**characterized in that**
the lateral acceleration limit value specifiable by the driver can be specified by means of a man-machine interface (319), wherein the lateral acceleration limit value specifiable by the driver can be specified indirectly by the selection of a driving style preferred by the driver.

3. Method according to at least one of Claims 1 and 2,
**characterized in that**
implementation of the method is started if the driver does not carry out a pedal operation and termination of implementation of the method takes place if the driver carries out a pedal operation.

4. Method according to at least one of Claims 1 through 3,
**characterized in that**
the determination of the radius of curvature takes place by means of camera sensors (303) and/or by means of radar sensors (304, 304') and/or by means of lidar sensors and/or by means of laser sensors and/or by means of digital map material (305) and a determination of the position of the motor vehicle.

5. Method according to Claim 4,
**characterized in that**
the determination of the position of the motor vehicle takes place by means of a global satellite navigation system and/or by means of a map matching process.

6. Method according to at least one of Claims 1 through 5,
**characterized in that**
the deceleration of the longitudinal speed achieved by the autonomous braking intervention does not exceed a specified deceleration limit value, in particular 3 m/s².

7. Method according to at least one of Claims 1 through 6,
**characterized in that**
the segment of route (13) ahead is selected from a number of possible route segments (13) to be driven through by the motor vehicle by means of the data of a route planner (305, 306).

8. Method according to at least one of Claims 1 through 7,
**characterized in that**
on detecting that the lateral acceleration limit value is exceeded, in particular the fixed specified lateral acceleration limit value, when driving through the route segment comprising the radius of curvature (13), passive safety means for the protection of vehicle occupants (308, 308') are activated, in particular one or a plurality of belt tensioners is/are activated.

9. Method according to at least one of Claims 1 through 8,
**characterized in that**
an estimation of the coefficient of friction is carried out, wherein the estimate of the coefficient of friction is used as a basis for a specification of the fixed specified lateral acceleration limit value.

10. Method according to at least one of Claims 1 through 9,
**characterized in that**
by means of the camera sensors (303) and/or by means of the radar sensors (304, 304') and/or by means of the lidar sensors and/or by means of the laser sensors a vehicle (22) ahead of the motor vehicle (11, 21, 302) is detected and a distance to and a speed difference relative to said vehicle are determined, wherein in the case in which the motor vehicle (11, 21, 302) is approaching the vehicle ahead (22) and during this it is likely that the distance will fall below a normal traffic safety distance, a deceleration of the longitudinal speed is carried out by means of a visual and/or audible and/or haptic request to the driver or by means of an autonomous braking intervention, so that the motor vehicle (11, 21, 302) is not likely to fall below the normal traffic safety distance to the vehicle ahead (22) and wherein in the case in which the motor vehicle (11, 21, 302) is no longer approaching the vehicle ahead (22) and/or the distance to the vehicle ahead (22) is increasing, the longitudinal acceleration is reduced by means of an engine drag torque reduction.

11. System for promoting a uniform driving style (301), comprising a motor vehicle (11, 21, 302) and camera sensors (303) and/or radar sensors (304, 304') and/or lidar sensors and/or laser sensors and/or position determination means (306) and/or an electronic memory (305) comprising digital map material and means for the determination of a longitudinal speed (307, 307') of the motor vehicle (11, 21, 302) and passive safety means for the protection of vehicle occupants (308, 308') and means for the determination of a radius of curvature (309) of a route segment ahead of the motor vehicle (13) and a gas pedal (310) and a brake pedal (311) for adjusting a longitudinal speed of the motor vehicle and a man-machine interface (319) and weather condition sensors (313, 313') and means for the estimation of the coefficient of friction (316) and means for the determination of a lateral acceleration to be expected (309) when driving through the route segment (13) and comparison means (300) for comparing the lateral acceleration to be expected with a fixed specified lateral acceleration limit value and with a lateral acceleration limit value specifiable by the driver and means for making a visual and/or audible and/or haptic request (317) to the driver for deceleration of the longitudinal speed and/or braking intervention means (318) for the autonomous deceleration of the longitudinal speed and means for engine drag torque reduction (314),
**characterized in that**
the system implements a method according to at least one of Claims 1 through 10.

## Revendications

1. Procédé visant à favoriser un style de conduite régulier,
- dans lequel une vitesse longitudinale d'un véhicule automobile (11, 21, 302) et un rayon de courbure d'un segment de route (13) situé à l'avant du véhicule automobile (11, 21, 302) sont déterminés lorsque le véhicule automobile s'approche dudit segment de route (13),
- dans lequel, à partir du rayon de courbure et de la vitesse longitudinale, une accélération transversale prévisible est déterminée lors du franchissement du segment de route (13) et est comparée à une limite d'accélération transversale fixe prédéfinie et à une limite d'accélération transversale pouvant être prédéfinie par le conducteur, et
- dans lequel, lorsque l'accélération transversale prévisible est supérieure à au moins l'une des limites d'accélération transversale, un ralentissement de la vitesse longitudinale est effectué au moyen d'un invite optique et/ou acoustique et/ou haptique à l'attention du conducteur et/ou au moyen d'une action de freinage autonome jusqu'à ce que l'accélération transversale prévisible atteigne la plus faible des deux limites d'accélération transversale,
**caractérisé en ce que**, dans le cas où l'accélération transversale prévisible est inférieure ou égale à la plus faible des deux limites d'accélération transversale, le ralentissement de la vitesse longitudinale est réduit au moyen d'une réduction du couple de frein moteur.

2. Procédé selon la revendication 1,
**caractérisé en ce que** la limite d'accélération transversale pouvant être prédéfinie par le conducteur peut être prédéfinie au moyen d'une interface homme-machine (319), dans lequel la limite d'accélération transversale pouvant être prédéfinie par le conducteur peut être prédéfinie indirectement par l'intermédiaire de la sélection d'un style de conduite préféré par le conducteur.

3. Procédé selon au moins l'une des revendications 1 et 2,
**caractérisé en ce qu'**un début de mise en oeuvre du procédé est effectué lorsque le conducteur n'effectue aucun actionnement de pédale et **en ce qu'**une fin d'exécution du procédé est effectuée lorsque le conducteur effectue un actionnement de pédale.

4. Procédé selon au moins l'une des revendications 1 à 3,
**caractérisé en ce que** la détermination du rayon de courbure est effectuée au moyen de capteurs à caméras (303) et/ou au moyen de capteurs radars (304, 304') et/ou au moyen de capteurs lidars et/ou au moyen de capteurs lasers et/ou au moyen de supports cartographiques numériques (305) et d'une détermination de position du véhicule automobile.

5. Procédé selon la revendication 4,
**caractérisé en ce que** la détermination de position du véhicule automobile est effectuée au moyen d'un système de navigation global par satellite et/ou au moyen d'un procédé d'intégration de cartes.

6. Procédé selon au moins l'une des revendications 1 à 5,
**caractérisé en ce que** le ralentissement de la vitesse longitudinale produit par l'action de freinage autonome ne dépasse pas une limite de ralentissement prédéterminée, notamment de 3 m/s².

7. Procédé selon au moins l'une des revendications 1 à 6,
**caractérisé en ce que** la section de route (13) située à l'avant est sélectionnée au moyen de données d'un planificateur d'itinéraire (305, 306) parmi une pluralité de sections de routes (13) possibles devant être franchies par le véhicule automobile.

8. Procédé selon au moins l'une des revendications 1 à 7,
**caractérisé en ce que**, lorsqu'il est détecté que la limite d'accélération transversale est dépassée,
notamment la limite d'accélération transversale prédéfinie de manière fixe, lors du franchissement de la section de route (13) présentant ledit rayon de courbure, des moyens de protection passifs sont activés pour protéger des occupants (308, 308') du véhicule, notamment, un ou plusieurs tendeurs de ceintures sont activés.

9. Procédé selon au moins l'une des revendications 1 à 8,
**caractérisé en ce qu'**une estimation du coefficient de frottement est effectuée, dans lequel l'estimation du coefficient de frottement est utilisée comme base pour une prédéfinition de la limite d'accélération transversale prédéfinie de manière fixe.

10. Procédé selon au moins l'une des revendications 1 à 9,
**caractérisé en ce qu'**un véhicule (22) précédant le véhicule automobile (11, 21, 302) est détecté au moyen des capteurs à caméras (303) et/ou au moyen des capteurs radars (304, 304') et/ou au moyen des capteurs lidars et/ou au moyen des capteurs lasers et **en ce qu'**une distance et une vitesse différentielle par rapport à ce dernier sont déterminées, dans lequel, lorsque le véhicule automobile (11, 21, 302) s'approche du véhicule précédent (22) et lorsqu'il se trouve de ce fait de manière prévisible en deçà d'une distance de sécurité habituelle, un ralentissement de la vitesse longitudinale est effectué au moyen d'une invite optique et/ou acoustique et/ou haptique à l'intention du conducteur ou au moyen d'une action de freinage autonome, de manière à ce que le véhicule automobile (11, 21, 302) ne se trouve pas de manière prévisible en deçà de la distance de sécurité habituelle par rapport au véhicule précédent (22) et dans lequel, lorsque le véhicule automobile (11, 21, 302) ne s'approche plus du véhicule précédent (22) et/ou lorsque la distance par rapport au véhicule précédent (22) augmente, le ralentissement longitudinal est réduit au moyen d'une réduction du couple de frein moteur.

11. Système visant à favoriser un style de conduite régulier (301), comprenant un véhicule automobile (11, 21, 302) et des capteurs à caméras (303) et/ou des capteurs radars (304, 304') et/ou des capteurs lidars et/ou des capteurs lasers et/ou des moyens de détermination de position (306) et/ou une mémoire électronique (305) contenant des supports cartographiques numériques, des moyens de détermination d'une vitesse longitudinale (307, 307') du véhicule automobile (11, 21, 302), des moyens de sécurité passifs pour protéger des occupants (308, 308') du véhicule, des moyens de détermination d'un rayon de courbure (309) d'une section de route (13) située à l'avant du véhicule automobile, une pédale d'accélérateur (310), une pédale de frein (311) pour régler une vitesse longitudinale du véhicule automobile, une interface homme-machine (319), des capteurs de situation météorologique (313, 313'), des moyens d'estimation de coefficient de frottement (316), des moyens de détermination d'une accélération transversale (309) prévisible lors du franchissement de la section de route (13), des moyens de comparaison (30) destinés à comparer l'accélération transversale prévisible à une limite d'accélération transversale prédéfinie de manière fixe et pouvant être prédéfinie par le conducteur, des moyens d'invite (317) optique et/ou acoustique et/ou haptique à l'intention du conducteur permettant de ralentir la vitesse longitudinale et/ou des moyens d'actionnement des freins (318) destinés à ralentir de manière autonome la vitesse longitudinale, et des moyens de réduction du couple de frein moteur (314),
**caractérisé en ce que** le système met en oeuvre un procédé selon au moins l'une des revendications 1 à 10.
